# EUROPEAN PATENT APPLICATION

(11) **EP 2 998 444 A1**
(43) Date of publication of application: **23.03.2016**
(21) Application number: 15179186.0
(22) Date of filing: 30.07.2015
(51) Int. Cl.: E01F 9/688, E01F 9/654, E01F 9/615

(54) **ROAD GUARDING LAMP**

(30) Priority: 30.07.2014 GB 201413488
(71) Applicant: Lundy, David Jonathan, Somerset BS22 8QU (GB)
(72) Inventor: Lundy, David Jonathan, Somerset BS22 8QU (GB)
(74) Representative: Pearson, James Ginn

(57) **Abstract**

The present invention provides a method of warning of a road hazard. The method comprises: providing a lamp (1) in a closed configuration; reconfiguring the lamp (1) from the closed configuration to an open configuration wherein in said open configuration the lamp (1) is arranged for deployment on a road cone (30) and standing on level ground; and sitting the lamp (1) on a road cone (30) or standing the lamp (1) on the ground. The present invention also includes a road guarding lamp (1) that is moveable between a closed configuration for storage and at least one open configuration for use.

## Description

### Technical Field

The present invention relates to improvements in and relating to road guarding lamps. More particularly, this invention concerns an improved road guarding lamp and a method of warning of a road hazard.

### Background of the Invention

Road guarding lamps (also known as hazard warning lights) are typically used by emergency services, construction workers and others to warn of highway hazards. Road guarding lamps typically comprise a light source and a power source. Road guarding lamps may also comprise a refractive lens. Road guarding lamps include Road Danger Lamps (low intensity lights) which are only suitable for night-time use and Flashing Beacons (high intensity lights) which may be used during daylight hours. Road guarding lamps may emit a steady or flashing light. Generally, road guarding lamps for use in the United Kingdom must be compliant with the European Standard BS EN 12352.

Prior-art road guarding lamps have been produced that may be deployed resting on the ground. Such "on-ground" lamps may include a large battery pack which acts as a base via which the lamp stands on the ground. Prior-art "on-ground" lamps may include fold-out feet for added stability.

Road guarding lamps have been produced that may be mounted on traffic cones (also known as road cones, safety cones).

Prior art road guarding lamps are typically irregularly shaped, making storage and transportation of the lamps difficult. For example, a typical prior art lamp may comprise a disc-shaped light sitting atop a cuboidal battery pack. Such lamps often require a specially designed holder in order to enable them to be arranged together for transport and even when placed in the holder large amounts of space may be wasted between each lamp. Inefficient storage of road guarding lamps is a particular problem in situations where space is limited; for example in emergency vehicles such as police cars where a wide range of equipment must be stored and transported within the vehicle. This problem is exacerbated if both types of road guarding lamps, "on-ground" and "on-cone" have to be transported. For example, police cars may often carry both "on-ground" and "on-cone" lamps simultaneously as the layout of road-guarding lamps at a particular hazard may be sub-optimal if only 'on ground' or only 'on cone' lamps are available. Thus, it would be advantageous to provide a road lamp that can be stored for transport more efficiently.

Due to the nature of the safety-critical situations in which road guarding lamps are used it is desirable that road guarding lamps exhibit good stability such that once deployed, a lamp remains in its original position. For example, road guarding lamps must stay in position when exposed to high winds, or the downdraft created by vehicles passing close to the lamps at high speed. Thus, it would be advantageous to provide a lamp with improved stability.

The present invention seeks to mitigate one or more of the above-mentioned problems.

### Summary of the Invention

According to a first aspect of the invention there is provided a road guarding lamp being moveable between a closed configuration for storage and at least one open configuration, wherein in at least one open configuration the lamp is arranged for deployment on a road cone and the lamp in at least one open configuration is arranged for standing on level ground. Providing a lamp that can be reconfigured between open and closed configurations facilitates designs which allow the lamp to be stored more efficiently and/or deployed with greater stability and/or flexibility.

A lamp may be said to be deployable on a cone if the lamp may be mounted on the cone for use without further structural modification, for example without the addition of a bracket or adaptor. Similarly, a lamp may be said to be deployable on the ground if it may stand alone on the ground for use without further structural modification. It will be understood that in order to be considered useable on a cone and/or on the ground a lamp must achieve a sufficient level of stability for use as a road guarding lamp. The road guarding lamp is preferably sufficiently stable that, when placed on a relatively flat road surface, it will not fall over when subjected to wind speeds, or gusts of air caused by passing vehicles, of a strength that is as great as that typically experienced no more than once a year on average in the UK. The road guarding lamp is preferably sufficiently stable when placed on a relatively flat road surface that, when subjected to the impact test set out as Impact Test B in part 6.6.2.1 of the European Standard BS EN 12352:2006(E) as updated in October 2010 - with the impact being directed at the geometric centre of the lens of the lamp - the lamp does not fall over. (The impact test concerned effectively requires a steel ball of mass of 0.95Kg suspended on a pendulum wire impacting the lamp head-on - in a horizontal direction - at a relative speed of about 6ms⁻¹).

Storage may include storage alongside a plurality of other lamps in accordance with the present invention. Storage may include storage alongside a plurality of other lamps in accordance with the present invention for transport, for example for transport in an emergency vehicle.

The ground may include a highway surface or other substantially horizontal surface. The lamp may rest directly on the ground.

It may be that the lamp is arranged such that, in use in the open configuration on a cone, a portion of the lamp contacts the cone. It may be that, in use in said open configuration, the lamp contacts the cone such that a substantially rigid connection is formed between the cone and the lamp. It may be that the lamp contacts the cone such that, in use in said open configuration, the lamp is securely connected to the cone under the action of gravity alone. That is to say, it may be that the lamp is configured such that no latching and/or locking mechanism is necessary in order to deploy the lamp on the cone.

The front surface of the lamp may be defined as the principal surface from which light is emitted. The rear surface of lamp may be defined as the surface opposite the front surface. It may be that, when deployed on level ground, the front surface of the lamp is substantially perpendicular to the ground. It may be that, when deployed on a cone, the front surface of the lamp is substantially perpendicular to the longitudinal axis of the cone.

It may be that in the closed configuration the volume occupied by the lamp is reduced as compared to the volume occupied by the lamp in the open configuration. Thus, the closed configuration may also be described as a closed and compact configuration. It may be that the lamp is not specifically arranged for deployment on a cone in the closed configuration. It may be that the lamp is not specifically arranged for deployment standing on level ground in the closed configuration. (It will of course be appreciated that whilst the lamp may not specifically be arranged for deployment standing on level ground in the closed configuration, it may nevertheless be possible for the lamp to be placed on the ground in an upright orientation, similar to the orientation in which it is normally deployed, yet being significantly less stable than the lamp is when deployed in the appropriate open configuration).

In the closed configuration the main body of the lamp may have four discernable surfaces, for example two pairs of surfaces arranged opposite each other. The main body of the lamp in the closed configuration may have a discernable edge, for example a chamfered edge, between each side. A first pair of the surfaces may be substantially planar. A second pair of the surfaces may be substantially planar. In the closed configuration the first pair of surfaces may be substantially parallel to one another. In the closed configuration the second pair of surfaces may be substantially parallel to one another. The substantially parallel nature of at least two of the sides of the lamp may facilitate efficient storage of lamps in accordance with the present invention. For example, lamps in accordance with the present invention may be stacked together. One of the substantially planar surfaces may be the front surface of the lamp. It may be that in the closed configuration the lamp is substantially cuboidal, for example a rectangular cuboid. The geometry of the planar surfaces may vary at one end of the lamp.

It may be that it is possible to stand the lamp in an upright (operational) position on the ground when it is in its closed configuration. In such a state, there will be one or more surfaces on the lamp which are in contact with the ground. It is preferred that the one or more surfaces on the lamp which are in contact with the ground when stood on the ground in such a position are different from the one or more surfaces on the lamp which are in contact with the ground when the lamp is deployed on the ground in an open configuration. It may be that the surface area of the lamp which is in contact with the ground (when in the form of a flat level surface) when the lamp is deployed on the ground in an open configuration is less than the surface area of the lamp which is in contact with the ground when the lamp is stood upright on the ground in its closed configuration.

The contact-length of the lamp may be defined as the distance between the foremost and rearmost points of contact between the lamp and a horizontal surface when the lamp is stood thereon (measured along an axis parallel to the horizontal surface). The contact-length of the lamp may be greater in the open configuration than in the closed configuration. The contact-length of the lamp in the open configuration may be more than 50% greater than the contact-length in the closed configuration. The lamp may have a λ or inverted-v shape in the open configuration.

It may be that the lamp is moveable between the closed configuration and an open configuration in which the lamp is arranged for (i) deployment on a road cone and (ii) standing on level ground. That is to say, it may be that a lamp can be used on a cone and on the ground in the same open configuration. Thus, the same lamp can be used both "on-cone" and "on-ground" as circumstances require. This may reduce the need for transporting two different types of lamp, thereby reducing the space that is occupied by lamps during transport, for example during transport by emergency vehicles.

The lamp includes a light source arranged and configured to emit light. The light source may comprise one or more electrically powered lights. The lamp may comprise one or more lights arranged to emit light from a face, for example the planar front surface, of the lamp. It may be that the one or more lights are arranged such that the region or regions from which light is emitted from the face of the lamp define(s) an area which is generally rectangular in shape. It may that the one or more lights are arranged such that the region or regions from which light is emitted from the face of the lamp define(s) an area which covers the majority of the face of the lamp.

The light source may be arranged and configured to emit a steady light. The light source may be arranged and configured to emit a pulsed (i.e. flashing) light. The light source may be arranged and configured to emit a flashing light at frequencies in the range of 30 to 240 flashes per minute, more preferably in the range of 50 to 160 flashes per minute, and possibly in the range of 55 to 75 flashes per minute. The light source may be arranged and configured to emit a flashing light, optionally in response to a control signal. The light emitted may be a flashing light in that the intensity of the light varies with a fixed frequency. There may be pulses of relatively high intensity light. Light (relatively low intensity light) may still be emitted between pulses of highest intensity light. The light source may extend across the majority of the planar front surface of the lamp. The light source may be located within a main housing.

It may be that the lamp comprises a moveable member. The moveable member may be mounted for movement from a first position relative to the main housing when the lamp is in the closed configuration to a second position relative to the main housing when the lamp is in an open configuration. The moveable member may be mounted for movement from the first position when the lamp is in the closed configuration to a third, or further, different, position relative to the main housing when the lamp is a second, or further, open configuration.

The moveable member may support the lamp when the lamp is in an open configuration. In use, the lamp may be supported by the moveable member when the lamp is deployed on a cone. In use, the lamp may be supported by the moveable member when the lamp is standing on level ground. In use, when the lamp is standing on the ground, the moveable member may extend between the main housing and the ground. The moveable member may have a length greater than or equal to half the height of the lamp.

The moveable member may be mounted for rotational movement. The moveable member may pivot about a point located in the region of a first end of the lamp, for example the uppermost end of the lamp when the lamp is in use on the ground. The moveable member may be mounted for linear translation.

In the first position, i.e. in the closed configuration, the moveable member may be in contact with the main housing along at least the majority of the length of the member. In the second position, i.e. in an open configuration, it may be that the majority of the length of the member is not in contact with the main housing.

In the first position, i.e. in the closed configuration, at least a portion of the moveable member may be located within the main housing. In the second position, i.e. in an open configuration, the same portion of the moveable member may be located outside the main housing. Thus, a given portion of the moveable member may be located within the main housing when the lamp is in the closed configuration and outside the main housing when the lamp is in an open configuration.

In the open configuration at least a portion of the moveable member may be spaced apart from the main housing such that a void is formed between the main housing and said portion of the moveable member. The void may be arranged and configured to receive a portion of, for example the upper end of, a cone. Providing such a void may increase the stability of a lamp in the open configuration when deployed on a cone by allowing the lamp to be placed over the top of the cone. The spacing between the moveable member and the main housing when the lamp is in an open configuration may be such that the moveable member and the main housing form a base for the lamp when the lamp is stood on the ground. Thus, providing a moveable member may facilitate designs which improve the ability of the lamp to be positioned in a stable position on level ground. The moveable member may include a foot portion which, in use, contacts the ground when the lamp is standing on the ground. The foot portion may be inclined with respect to the rest of the member.

It may be that the moveable member comprises a recess arranged and configured to receive a portion of a cone when the lamp is in the open configuration. It may be that the recess is in the form of a cut-out, for example a hole or notch formed in the member. It may be that the recess is in the form of a depression formed in the surface of the member. The recess may be arranged and configured to engage a portion of the circumference of a cone when the lamp is in the open configuration. The recess may comprise a semi-circular or arcuate edge. The recess may be arranged and configured to engage the cone in a region adjacent to the upper end of the cone when the lamp is in the open configuration. Providing a recess may assist in deploying a lamp in the open configuration more securely on a cone by allowing the lamp to engage with the cone via the recess. It will be understood that a recess may be provided in addition to, or instead of, a void between the main housing and the member as described above.

It may be that it is the position of the moveable member which determines whether the lamp is in an open or closed configuration. Thus, it may be that when the moveable member is in the first position the lamp is in the closed configuration. It may be that when the moveable member is in the second position the lamp is in an open configuration. It may be that when the moveable member is in the third or further positions, the lamp is in an open configuration. It may be that moving the moveable member from the first position to the second position reconfigures the lamp from the closed configuration to an open configuration. It may be that a single movement of the moveable member, for example a single rotation or a single translation of the member, reconfigures the lamp from the closed configuration to the at least one open configuration. It may be that a single movement of the moveable member reconfigures the lamp from the at least one open configuration to the closed configuration.

It may be that the lamp comprises a switch arranged and configured such that reconfiguring the lamp from the closed configuration to an open configuration switches the lamp on. It may be that the lamp comprises a switch arranged and configured such that moving the moveable member from the first position to the second position switches the lamp on. Thus, it may be that a single movement of the moveable member from the first position to the second position reconfigures the lamp from the closed configuration to an open configuration and switches the lamp on. Linking the switching on of the lamp to the reconfiguration of the lamp reduces the risk of accidental activation or deactivation compared to, for example, a push button. Linking the state of operation (i.e. on or off) of the lamp to its configuration also makes it easier to see the state of operation at a glance and from a distance. This may be of particular application in lights that flash, or when a large number of lamps are being deployed. The lamp may include a reed switch that is closed when the lamp is reconfigured from the closed to the open configuration.

It may be that the switch is arranged and configured such that reconfiguring the lamp from an open configuration to the closed configuration switches the light off. It may be that the switch is arranged and configured such that moving the moveable member from the second position to the first position switches the lamp off. Thus, it may be that a single movement of the moveable member from the second position to the first position reconfigures the lamp from an open configuration to the closed configuration and switches the lamp off.

In an open configuration the foremost point of contact between the lamp and a horizontal surface, for example the ground, when the lamp is stood thereon, may be located on the main housing. In the open configuration the rearmost point of contact between the lamp and the horizontal surface may be located on the moveable member. Thus, it the open configuration the foremost and rearmost point of contact between the lamp and the horizontal surface may be located on the housing and on the moveable member respectively. In the closed configuration the foremost and rearmost points of contact between the lamp and the ground may be located on the same component. For example, it may be that both points are located on the moveable member or both points are located on the main housing.

It may be that the lamp comprises an outer casing which in the closed configuration extends over at least a portion of the main housing. The outer casing may extend over the majority of the surface area of the housing when the lamp is in the closed configuration. It may be that the outer casing is mounted for movement relative to the housing. It may be that the outer casing is the moveable member. The outer casing may move relative to the housing when the lamp is reconfigured between the open and closed configurations. It may be that the outer casing is mounted for pivotal movement relative to the housing. It may be that the outer casing is mounted for linear displacement relative to the housing. Thus, it may be that the lamp includes a main housing and an outer casing, the outer casing being arranged and configured to rotate relative to the main housing when the lamp is reconfigured between an open configuration and the closed configuration. It may be that in an open configuration a portion of the outer casing is spaced apart from the housing such that a void is created between the outer casing and the housing. In use, a portion of a cone, for example a portion of the cone adjacent to the upper end of the cone, may be located in the void formed between the housing and outer casing.

It may be that the recess is in the form of a notch formed in an edge of the outer casing. The notch may be arranged and configured to engage a portion of the circumference of a cone when the lamp is in the open configuration. The notch may comprise a semi-circular or arcuate edge.

It may be that the recess is in the form of a depression formed in the surface of the outer casing facing the housing. The depression may be arranged and configured to engage the cone in a region adjacent to the upper end of the cone when the lamp is in the open configuration.

The recess may be in the form of a hole in the outer casing. The hole may be arranged to receive the upper end of a cone when the lamp is in the open configuration. When the lamp is deployed on a cone, the upper end of the cone may pass through the hole.

The lamp may comprise a handle. The handle may form part of the moveable member. The handle may be formed integrally with the moveable member. That is to say the moveable member and the handle may be of monolithic construction. The handle may be formed integrally with the outer casing of the lamp. Thus, the lamp may comprise a handle, the handle being integrally formed with the outer casing. Forming the handle as part of the moveable member may facilitate reconfiguration of the lamp from the closed configuration to the open configuration.

It may be that the light source comprises a plurality of light emitting diodes (LEDs). Thus, the light produced by the road guarding lamp may be emitted by the plurality of light emitting diodes. Using light emitting diodes in the lamp may reduce the power required to produce a given level of light in comparison to other light-emitting devices, for example xenon bulbs. Using a plurality of LEDs may increase the reliability of the device as the remaining LEDs will still continue to emit light in the event that a single LED fails. The lamp may contain 9 or more LEDs, for example 16, 20, 25, 30 or 36 LEDs. The lamp may contain fewer than 50 LEDs. The LEDs may be arranged in a regularly spaced array, for example a five-by-five array. The light source, for example the array of LEDs, may extend across the majority of the front surface of the lamp.

The lamp may comprise a lens. The lens may extend across at least a portion of the light source. Thus, light from the light source may be transmitted via the lens. When the light source comprises a plurality of lights, for example a plurality of LEDs, a single lens may extend across a plurality of lights, for example across all of the lights. The lens may be removably mounted. Removably mounting the lens may allow lenses to be changed by the end user, thereby facilitating the use of a variety of different coloured lenses on the same lamp. Thus, removably mounted lenses may increase the versatility of the lamp. The lens may act as an optical filter such that only light of particular wavelengths (i.e. colours) is transmitted via the lens while other wavelengths are blocked. Thus, the lens may be a coloured lens. When the lens is a coloured lens, it may be that the light source emits white light. The lens may be a polarising lens.

The lens may extend across a significant proportion of the planar front of the lamp. The lens may extend across at least 25% of the front of the lamp.

The lens and/or the light source may be recessed into the housing. Recessing the lens into the housing may protect the lens from damage when the lamp is in use.

The lamp may comprise one or more reflective surfaces. A reflective surface may include one or more retroreflectors. The provision of reflective surfaces, in addition to the light source, may improve the visibility of the lamp and/or enable the lamp to continue to provide some road guarding function if the light source should fail. Reflective surfaces may be provided at various locations on the lamp, for example, bordering the lens, on the rear and/or sides of the lamp.

The lamp may include a passive infrared (PIR) sensor. The PIR may be arranged and configured to facilitate synchronisation of the lamp with other like lamps.

It may be that the lamp comprises an electrical power source, for example a battery pack. The battery may be located at a location spaced apart from either end of the lamp. For example, the battery may be located equidistant to the ends of the lamp. Alternatively, the battery may be located in the region of one end of the lamp. For example, at the end of the lamp which, when the lamp is deployed on the ground is closest to the road surface. The battery may be located in the base of the lamp. Locating the battery nearer to the base of the lamp may improve the stability of the lamp.

The lamp may comprise a base portion. The lamp may comprise a main portion. The main housing may comprise a main portion and a base portion. The light source may be located in the main portion. The base portion may be at the opposite end of the lamp to the handle portion. The main portion may be located between the handle and the base portion. The base portion may house the battery pack. For example, the base portion may comprise a recess arranged to receive a battery pack. Alternatively, the base portion may be in the form of a removably connected battery pack. The lamp may be arranged such that, in use, the lamp stands on the base portion when the lamp is resting on the ground. Providing a base portion which houses the battery may increase the height of the light source above the road surface while lowering the centre of gravity thereby improving the visibility and stability of the lamp.

The battery may be located in a recess formed in the housing of the lamp. The outer casing of the lamp may comprise a cut-out to facilitate access to the battery pack.

The battery pack may be a 6V pack. The battery pack may have a mass of greater than 500g. The battery pack preferably has a mass less than 2Kg and preferably less than 1Kg. The battery pack may be sufficient to power the light for a minimum of 600 hours.

The lamp in the closed configuration may have a volume of between 1,000 cm³ and 20,000 cm³. The lamp in the closed configuration may have a volume of at least 2,500 cm³. The lamp in the closed configuration may have a volume of less than 10,000 cm³. The lamp in the closed configuration may have a height of greater than 100mm. The lamp in the closed configuration may have a height of less than 500mm, preferably less than 300mm. The lamp in the closed configuration may have a width of greater than 100mm. The lamp in the closed configuration may have a width of less than 300mm and preferably less than 200mm. The lamp in the closed configuration may have a depth of greater than 50mm. The lamp in the closed configuration may have a depth of less than 200mm and preferably less than 150mm, for example less than 100mm. The lamp - with any batteries than it may require being included - may weigh between 1 and 5Kg. It is preferred that the lamp - with any batteries than it may require being included - has a mass of less than 2Kg. The lamp may be arranged such that, when the lamp is deployed in an open configuration on level ground, the centre of the light source is at a height of at least 50mm, preferably at least 150mm, above the surface of the road.

The lamp may be a portable lamp. That is to say, the lamp may be suitable for movement by hand, without the need for additional machinery.

A cone, for example a traffic cone, generally comprises a base portion which in use contacts the ground and a tapered portion the longitudinal axis of which extends perpendicular to the plane of the base portion. In use, in the open configuration, the lamp may extend over the upper end of the tapered portion of a cone. For example, the upper end of the cone may be located within a void defined at least in part by the housing and the moveable member. Thus, the upper end of the cone may be located between the main casing and moveable member of the lamp. The upper end of the cone may be located within a recess defined at least in part by the moveable member. Thus, the upper end of the cone may be located within a recess formed in the moveable member.

It may be that the lamp is suitable for repeated reconfiguration between the closed configuration and the at least one open configuration. Thus, it may be that the lamp is reusable rather than disposable.

The lamp may be provided with a formation and/or a corresponding formation. The formation of a first lamp may be arranged to engage with the corresponding formation of a second lamp. The lamp may be arranged for said engagement when the lamp is in the closed and/or in the at least one open configuration. Each lamp may comprise a formation and a corresponding formation such that a series of lamps may be joined together. Providing a formation and/or a corresponding formation on each lamp may facilitate more secure storage of the lamps, particularly when a number of like lamps are stored and transported in a transport vehicle thereby reducing the risk of the lamps causing damage (to each other or other objects). The formation may, for example, comprise a protrusion, ridge or catch member. The corresponding formation may, for example, comprise a recess, depression or corresponding catch member. Engagement of the formation and corresponding formation may provide a mechanical attachment between the first and second lamps. Engagement of the formation and corresponding formation may prevent adjacent lamps from moving relative to each other in one or more directions. Engagement of the formation and corresponding formation may provide for interlocking of the first and second lamps.

According to a second aspect of the invention, there is provided a method of warning of a road hazard, the method comprising the steps of: providing a lamp in a closed configuration; reconfiguring the lamp from the closed configuration to an open configuration, wherein in said open configuration the lamp is arranged for (i) deployment on a road cone and (ii) standing on level ground; and including one of: the step of sitting the lamp on a road cone in the open configuration and the step of standing the lamp on the ground in said open configuration.

The method may further include the other one of: the step of standing the lamp on the ground in said open configuration and the step of mounting the lamp on a road cone in said open configuration. Thus, the method may include the step of moving the lamp between standing on the ground and sitting on the lamp without reconfiguring the lamp.

The step of reconfiguring the lamp from the closed configuration to the open configuration may include moving the moveable member, for example the outer casing, relative to the main housing. The step of sitting the lamp on the cone may include placing the lamp over the upper end of a cone such that a portion of the cone is located within the void formed between the housing and the moveable member, for example the outer casing, when the lamp is in the open configuration. The step of sitting the lamp on the cone may include receiving a portion of the road cone within the recess formed within the movable member.

It may be that the step of reconfiguring the lamp from the closed configuration to the open configuration switches on the lamp. It may be that the step of reconfiguring the lamp from the closed configuration to the open configuration switches off the lamp.

The method may include the step of standing the lamp on the ground in the open configuration. It may be that no further reconfiguration of the lamp is required in order to stand the lamp on the ground.

The method may include the step of removing a first removably mounted coloured lens from the lamp and mounting a second, differently coloured, lens on the lamp. For example, the method may include the step of removing an amber lens from the lamp and replacing the amber lens with a blue lens. Removably mounting the lens may therefore allow a lamp to be used in a wider variety of situations by facilitating the changing of the colour of the lamp depending on the circumstances.

The step of providing a lamp in a closed configuration may include the step of transporting the lamp to the location of the hazard in the closed configuration. Transporting the lamp to the hazard in a closed configuration may allow the lamp to be more efficiently stored alongside like lamps during transportation.

The step of transporting the lamp may include stacking the lamp with other like lamps. The step of transporting the lamp may include engaging the formation of a first lamp with a corresponding formation of a second lamp. Transporting a plurality of like lamps may therefore comprise interlocking and/or attaching the plurality of like lamps together prior to transport.

According to a third aspect of the invention, there is provided a method of warning of a road hazard, the method comprising the steps of:
- providing a lamp in a closed configuration;
- reconfiguring the lamp from the closed configuration to an open configuration, wherein in said open configuration the lamp is arranged for deployment on a road cone and for standing on level ground; and
- standing the lamp on level ground.

According to a fourth aspect of the invention, there is provided a road guarding lamp comprising one or more electrically powered lights, wherein the lamp is moveable between a closed configuration for storage and at least one open configuration for operation of the lamp, wherein the lamp is so arranged that the movement of the lamp from its closed configuration to its open configuration both:
improves the ability of the lamp to be positioned in a stable and static position relative to the road and
causes the one or more lights to operate,
and the movement of the lamp from its open configuration to its closed configuration both:
improves the ability of the lamp to be stored compactly with other like lamps also in their closed configuration, and causes the one or more lights to cease operating.

Improving the ability of the lamp to be positioned in a stable and static position relative to the road involves making the lamp harder to knock over. The stable and static position relative to the road may include a position wherein the lamp is mounted on a cone. The stable and static position relative to the road may include a position wherein the lamp is stood on the road. It may be that improving the ability of the lamp to be position in a stable and static position relative to the road includes increasing the contact-length of the lamp compared to the contact-length of the lamp in the closed configuration.

Improving the ability of the lamp to be stored compactly with other like lamps also in their closed configuration may include allowing a lamp to be stored in a well-balanced position relative to the other like lamps without the need for a holder. It may be that improving the ability of the lamp to be stored compactly includes reconfiguring the lamp into a generally cuboidal shape.

According to a fifth aspect of the invention, there is provided a portable road guarding lamp, wherein:
the lamp comprises one or more lights arranged to emit light from a face of the lamp such that the region or regions from which light is emitted from the face define(s) an area which is generally rectangular in shape and which covers the majority of the face of the lamp,
the lamp is arranged to be configured in a closed configuration for storage in which the lamp has a generally cuboidal shape,
the lamp is arranged to be configured in an open configuration for operation of the lamp,
the lamp is so arranged that movement of the lamp from its closed configuration to its open configuration improves the ability of the lamp to be positioned in a stable and static position relative to the road, and
the movement of the lamp from its open configuration to its closed configuration improves the ability of the lamp to be stored compactly with other like lamps also in their closed configuration, by means of reducing the volume occupied by the lamp.

It may be that the lamp has a generally λ or inverted-v shape in the open configuration.

Any features described with reference to one aspect of the invention are equally applicable to any other aspect of the invention, and vice versa. In particular, features described with reference to the first aspect of the invention are equally applicable to the fourth and fifth aspects of the invention.

### Description of the Drawings

Various embodiments of the invention will now be described, by way of example only, with reference to the accompanying schematic drawings of which:
FIG. 1 shows a perspective front view (part wire-frame) of a road guarding lamp in accordance with a first embodiment of the present invention in the closed configuration;
FIG. 2 shows a perspective rear view of a road guarding lamp in accordance with the first embodiment in the closed configuration;
FIGS. 3a and 3b show perspective views of a road guarding lamp in accordance with the first embodiment in the open configuration when deployed on a traffic cone;
FIGS. 4a and 4b show perspective views of a road guarding lamp in accordance with the first embodiment in the open configuration when standing on the ground;
FIG. 5 shows a perspective front view of a road guarding lamp in accordance with a second embodiment of the present invention in the closed configuration;
FIG. 6 shows a perspective rear view of a road guarding lamp in accordance with the second embodiment of the present invention in the closed configuration;

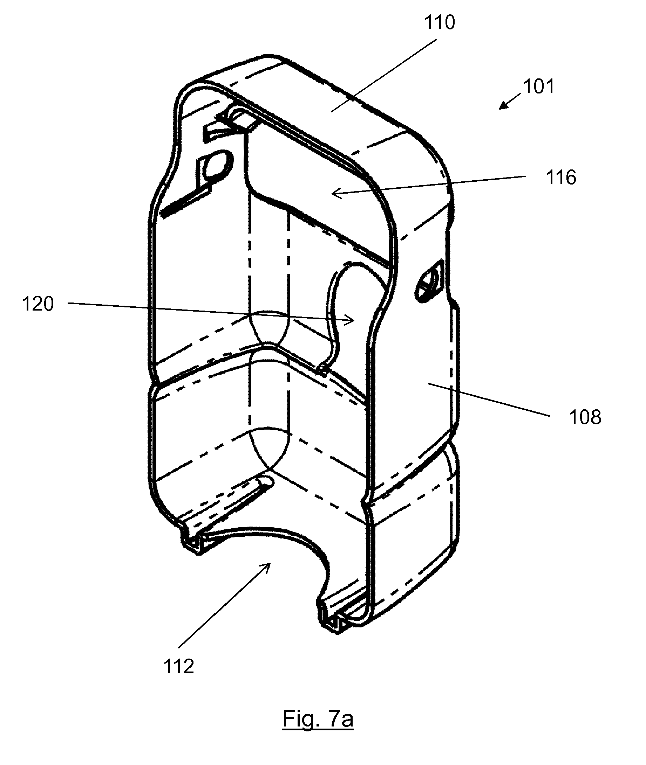

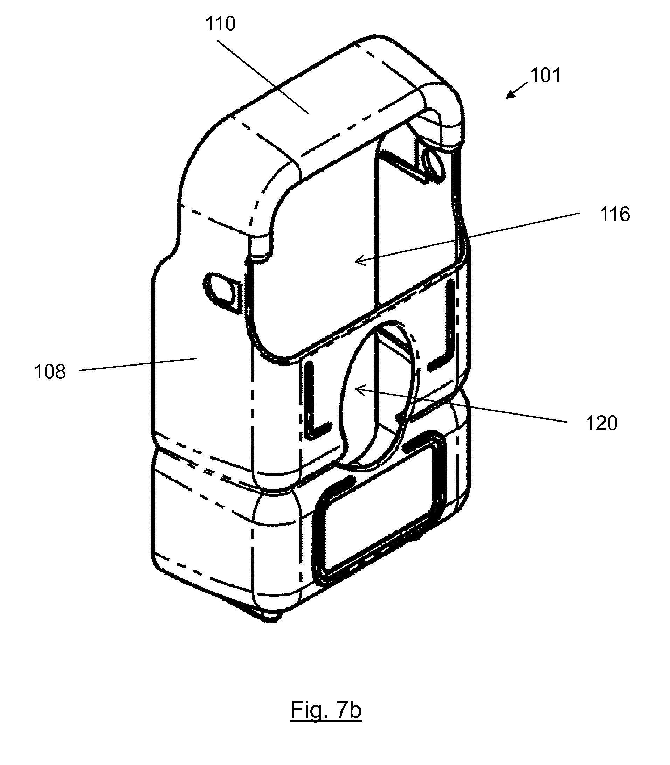

FIGS. 7a and 7b show a perspective views of the outer casing of a road guarding lamp in accordance with the second embodiment of the present invention; and
FIG. 8 shows a side view of a road guarding lamp in accordance with the second embodiment of the present invention in the open configuration when standing on the ground.

### Detailed Description

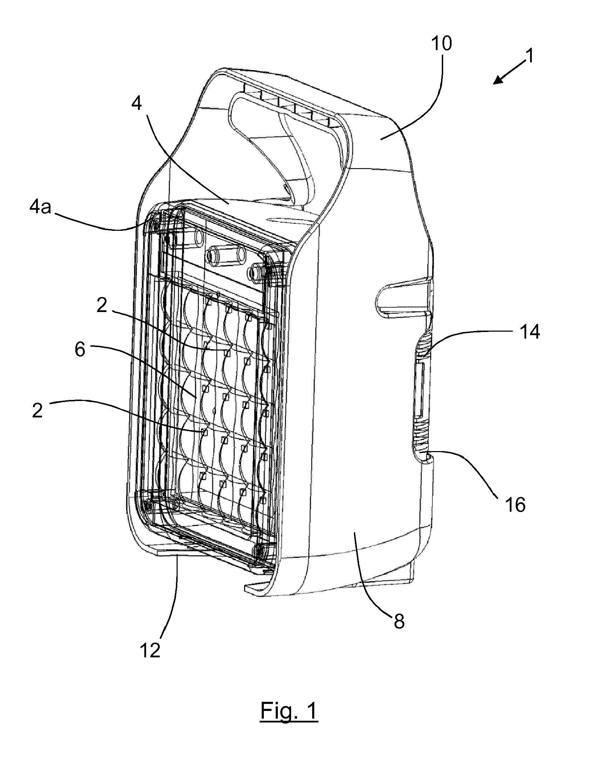

FIG. 1 shows a front perspective view of a road guarding lamp 1 in accordance with a first embodiment of the present invention in the closed configuration. The lamp 1 comprises a primary housing 4. The primary housing 4 has an open front face 4a in which a rectangular array of twenty five regularly spaced Light Emitting Diodes (LEDs) 2 is arranged in a 5-by-5 array. A substantially planar rectangular coloured lens 6 extends over the LEDs 2 and the open front face 4a of the housing. The lens 6 and LEDs 2 extend over the majority of the surface area of the front face of the lamp 1. An outer casing 8 extends around the left and right sides, top and bottom ends, and back of the housing 4, leaving the rectangular lens 6 exposed. The casing 8 is in contact with the housing 4 over the majority of the surface area of the housing 4. The height of the casing 8 is greater than the height of the main housing 4. At the upper end of the lamp 1 the outer casing 8 is formed into an integral handle 10. At the bottom end of the lamp 1 the front edge of the outer casing includes a semi-circular notch 12. A battery pack 14 is located midway up the rear surface of the housing 4 in a recess formed therein. The battery pack has a mass of about 0.6Kg. A large cut-out 16 in the outer casing 8 at the back of the lamp 1 extends from below the battery pack 14 beyond the upper surface of the housing 4. The mass of the lamp with its battery pack installed is about 1.6Kg.

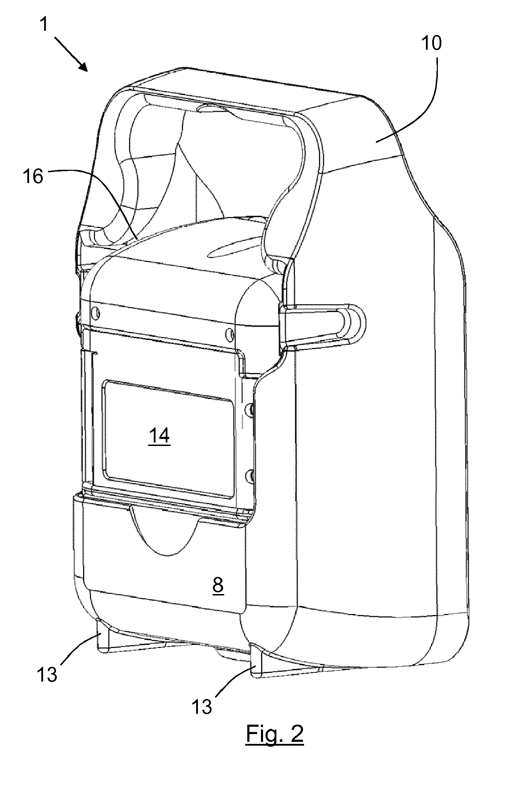

FIG.2 shows a back perspective view of the road guarding lamp 1 in the closed configuration. FIG. 2 shows the cut-out 16 extending across the width of housing 4 from below the battery pack 14 beyond the top of housing 4. In its closed configuration, the lamp has a height of about 250mm, a width of about 180mm and a depth of about 90mm. The lamp thus has a volume of about 4,000 cm³. The lamp has two feet 13 so that the lamp may be stored in a position standing on its feet 13 with the handle 10 being located uppermost.

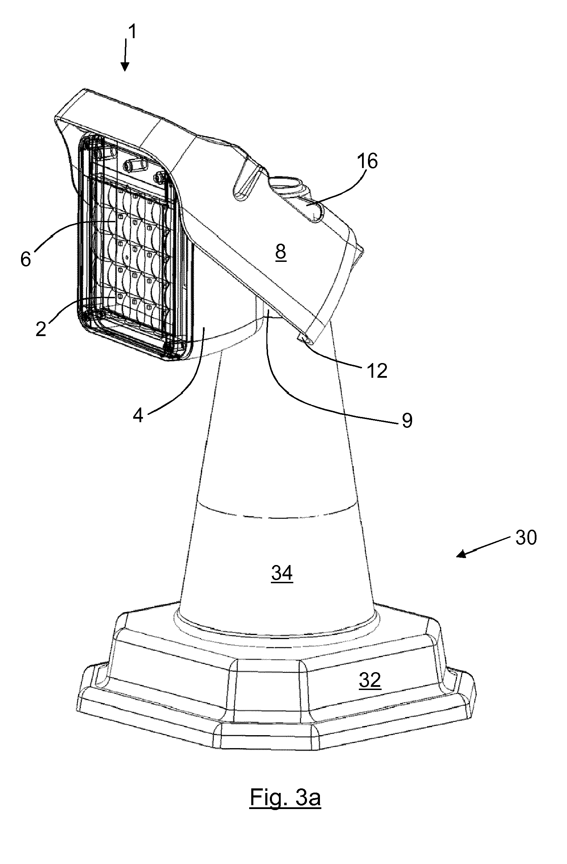

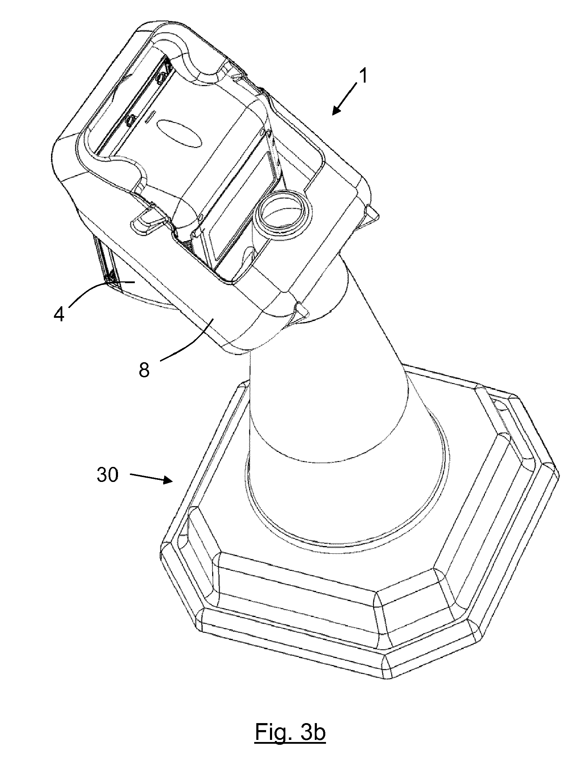

FIGS. 3a and 3b show perspective views of the road guarding lamp 1 in the open configuration, deployed on a traffic cone. In the open configuration, the outer casing 8 is rotated relative to the housing 4 about a point near the top of the main housing 4, as compared to its position in the closed configuration shown in FIG. 1. A stop mechanism prevents the outer casing 8 from being rotated from the housing 4 beyond the position shown in FIGS 3a and 3b. A void 9 is formed between the outer casing 8 and the rear surface of the main housing 4. The top end of the casing 8, including handle 10, is located forward of the coloured lens 6. The bottom end of the outer casing 8, including the semi-circular notch 12 is spaced apart from the back surface of the housing 4. The traffic cone 30 includes a base portion 32 and a tapered cone 34 extending vertically therefrom. FIGS. 3a and 3b show that the height of the lamp 1 is less than half of the height of the tapered cone 34. The upper end of the tapered cone 34 is located within the space formed between the rear surface of the housing 4 and outer casing 8. A portion of the outer surface of the tapered cone 34 on the opposite side of the cone 30 to the housing 4 sits within the semi-circular notch 12.

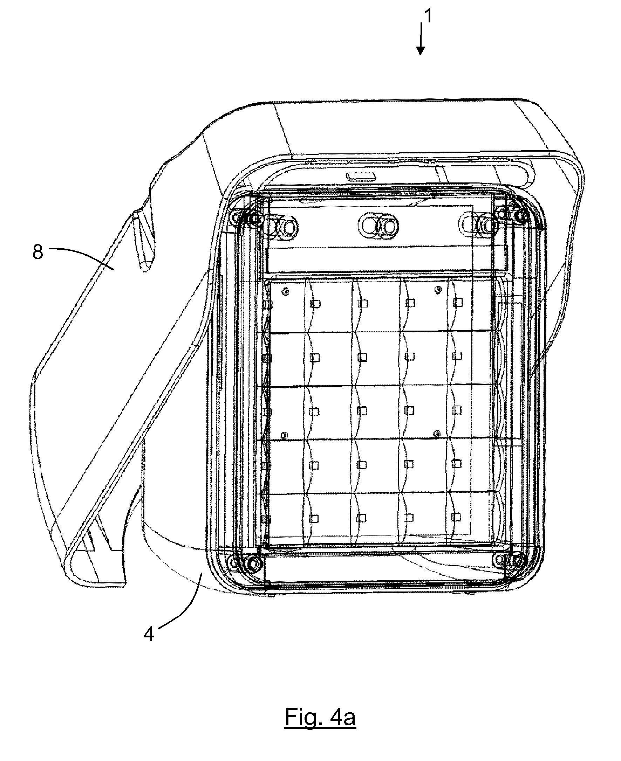

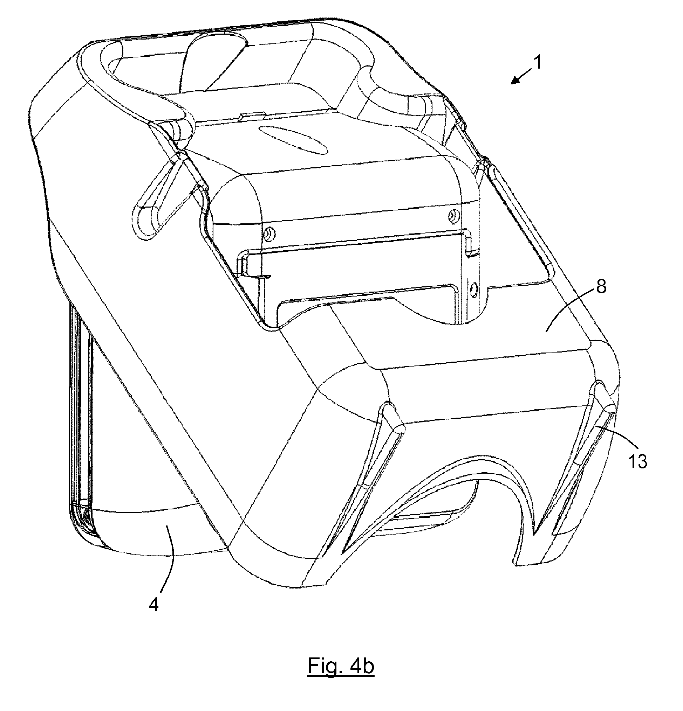

FIGS. 4a and 4b show perspective views of the road guarding lamp 1 in the open configuration, standing on the ground. The road guarding lamp 1 is configured as in FIGS. 3a and 3b in its open configuration. Thus, the outer casing 8 has been rotated relative to the housing 4 from the closed configuration (shown in FIG. 1) so that the outer casing 8 and the housing 4 together define an A-frame-type structure. The stop mechanism ensures that the A-frame-type structure is stable and resists further movement apart of the outer casing 8 from the housing 4. The base of the housing 4 and the lower end of the outer casing 8 rest on the ground, such that the plane of the coloured lens 6 is arranged substantially vertically. It will be seen that the feet 13 - for allowing storage - do not touch the ground in this configuration.

In use, light from the LEDs 2 is transmitted via the coloured lens 6. The lamp 1 is reconfigured from the closed configuration as shown in FIG. 1 and FIG. 2 to the open configuration as shown in FIGS. 3a and 3b and in FIGS. 4a and 4b by rotating the outer casing 8 relative to the housing 4 such that the lower part of the outer casing 8 moves away from the back of the housing 4. Rotation of the lamp from the closed configuration to the open configuration causes the lamp to be switched on, and vice versa. The gap formed between the housing 4 and outer casing 8 receives the top of the traffic cone 30. Thus, the rotation of the outer casing 80 to the open configuration permits the lamp 1 to be securely located on the top of a cone 30. The notch 12 which engages the cone provides additional stability to the lamp 1 when deployed on the cone. As can be seen in FIG. 3a the lamp 1 has a λ-shape when viewed from the side in the open configuration. The additional width at the base of the lamp 1 created by the rearward displacement of the lower portion of the outer casing 8 also provides stability to the lamp 1 when it is stood directly on the ground. Thus, the open configuration permits the lamp 1 to be deployed stably on a cone and on the ground, thereby providing increased flexibility in how and where the lamp is used.

The ability of the lamp 1 to be reconfigured between the open and closed configuration permits the lamp 1 to be stored efficiently when not in use. In particular, in the closed position as shown in FIG. 1 and FIG. 2, the rectangular cuboidal shape of the lamp 1 facilitates stacking of the lamp 1 with other lamps in accordance with the present invention, without the need for any specialist carrier. Thus, lamps as described above may be efficiently stored for transport to hazard sites and while not in use. The cut-out 16 permits access to the battery pack 14.

The LED array of the lamp is arranged, when in its operational (open) configuration, to emit light which flashes with a frequency of about one flash per second. The lamp has a control circuit (not shown) which controls the flashing light, so that the LED array remains illuminated at all times (when the lamp is in its operational - i.e. open - configuration) in between the flashes of higher intensity. The flashing lamp may thus be considered as "backlit". The flashes may have a frequency of about 55 flashes per minute. Each flash of high intensity light (the light emitted by the lamp having an intensity of at least 50 Candelas and possibly more than 200 Candelas when measured over a solid angle of ± 10° left/right ± 5° up/down from the lamp's principal lighting axis) has a duration of at least 200ms. The control circuit may be configured so that the timing of the flashing is synchronised with the flashing of an adjacent lamp. This can be achieved by means of a light sensor that detects the timing of the flashing of an adjacent lamp. A series of lamps may then be arranged so that the lamps flash on and off in sequence, say with a delay between adjacent lamps of between 50ms and 250ms.

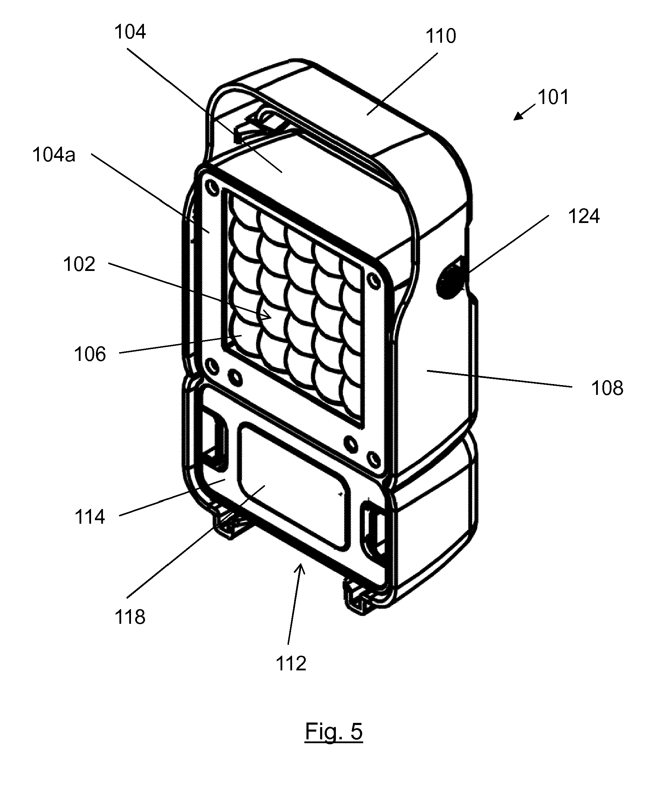

FIG. 5 shows a front perspective view of a road guarding lamp 101 in accordance with a second embodiment of the present invention in a closed configuration.

As per lamp 1, lamp 101 comprises a primary housing 104 having an open front face 104a, and an outer casing 108 having an integral handle 110 and a semi-circular notch 112. Only those aspects of the lamp of the second embodiment which differ significantly with respect to the first embodiment will now be described.

Lamp 101 comprises a removable battery pack 114 disposed in the bottom end of the housing 104. A rectangular 5-by-5 array of twenty five regularly spaced Light Emitting Diodes (LEDs) 102 is disposed in the housing 104 above the battery pack 114. The battery pack is substantially heavier than the array of LEDs and their associated circuitry. Accordingly, in lamps in accordance with the second embodiment the centre of gravity of the lamp 101 is closer to the ground and the LEDs are raised higher off the ground, as compared to lamp 1.

In its closed configuration, the lamp 101 has a height of about 330mm, a width of about 180mm and a depth of about 90mm. The lamp 101 thus has a volume of about 5,300 cm³. When the lamp is stood on level ground in the closed configuration, the height of the centre of the lens 106 is over midway up the lamp 101.

A substantially planar rectangular coloured lens 106 extends over the LEDs 102. The lens 106 extends over a significant proportion of the open front face 104a. The lens 106 is recessed into the housing relative the portion of the open front face 104a which boarders the lens 106. Recessing the lens 106 reduces the probability the lens 106 will be damaged if the lamp 101 were to be dropped onto its open front face 104a.

The remaining, lower, portion of the open front face 104a corresponds to a side of the battery pack 114. A first retroreflector 118 is provided on this portion of the open front face 104a.

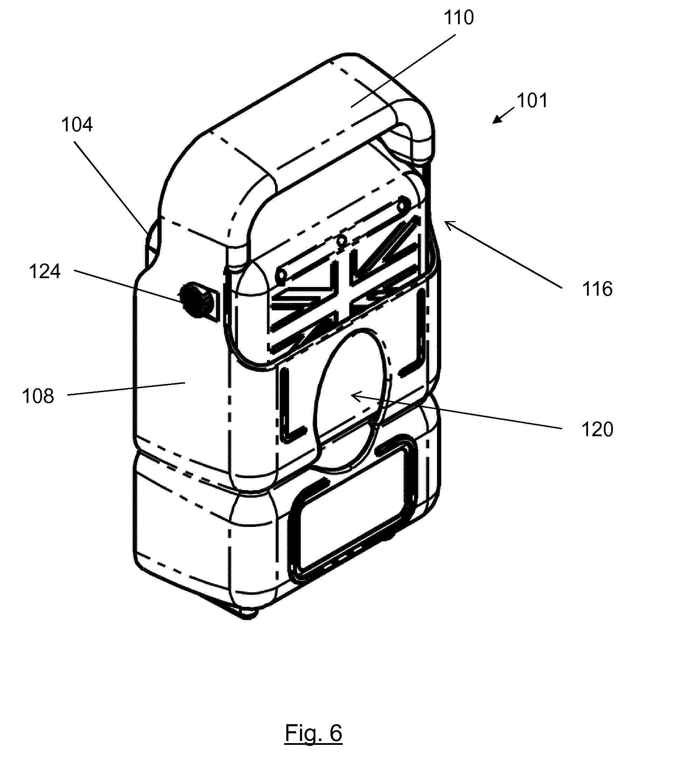

FIG. 6 shows a rear perspective view of a road guarding lamp 101 in accordance with a second embodiment of the present invention in the closed configuration.

As can be seen in FIG. 6, the outer casing 108 comprises a first cut-out 116. The first cut out 116 extends laterally across the width of housing 104 and longitudinally from the rear of the lamp 101, at approximately the same height as the centre of the lens 106, to beyond the upper surface of the housing 104.

The outer casing 108 comprises a second cut-out 120 approximately central to the rear of the lamp 101. The second cut-out 120 has an oval shape configured to receive, in use when deployed on a traffic cone 30, the upper end of the tapered cone 34.

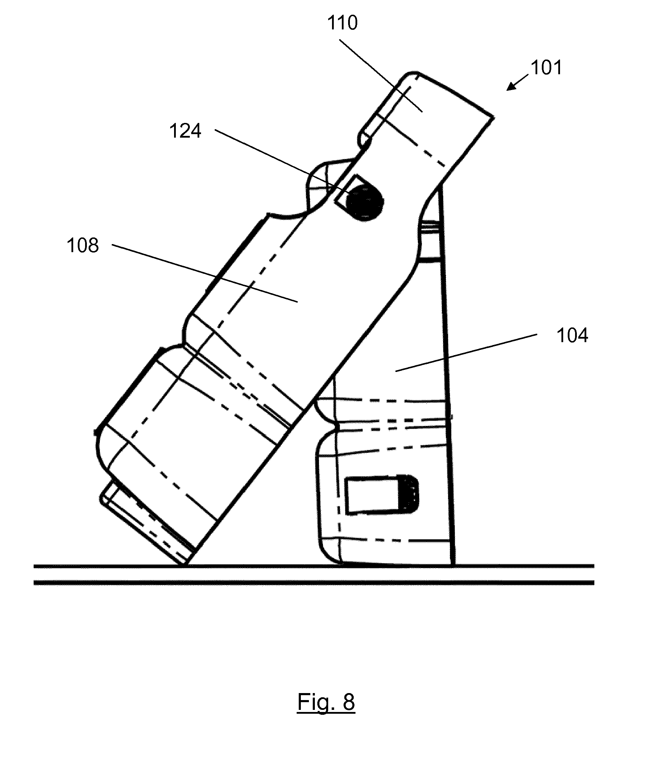

FIG. 8 shows a perspective view of the road guarding lamp 101 of the second embodiment in the open configuration, standing on the ground. In the same open configuration, the lamp 101 may also be sat on a traffic cone 30 with the top of the cone passing through the hole 120 and a portion of the cone 34 located within void 109. The edges of the second cut-out 120, particularly the bottommost arcuate edge of the second cut-out 120, are arranged to engage with a portion of the outer surface of the tapered cone 34.

Whilst the present invention has been described and illustrated with reference to particular embodiments, it will be appreciated by those of ordinary skill in the art that the invention lends itself to many different variations not specifically illustrated herein.

For example, while the outer casing rotates in the above embodiments it will be understood that other modes of movement of the casing relative to the housing made be employed and/or that other elements of the structure of the lamp may move in addition to, or instead of the casing. In addition, while LEDs are used in the above embodiments it will be appreciated that other light sources may be employed. The open configuration of the lamp when hung from a road cone could be a different open configuration of the lamp when stood on the ground. The lower end of the outer casing, which rests on the ground when the lamp is in its open configuration for deployment directly on the ground, may include pads, feet or other formations to provide a contact surface for resting on the ground. Higher or lower intensity lamps may be used.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims.

## Claims

1. A method of warning of a road hazard, the method comprising the steps of:
providing a lamp in a closed configuration;
reconfiguring the lamp from the closed configuration to an open configuration, wherein in said open configuration the lamp is arranged for (i) deployment on a road cone and (ii) standing on level ground; and
including one of: the step of sitting the lamp on a road cone in said open configuration and the step of standing the lamp on the ground in said open configuration.

2. A method according to claim 1, further including the other one of: the step of standing the lamp on the ground in said open configuration and the step of mounting the lamp on a road cone in said open configuration.

3. A method according to any preceding claim, wherein the lamp comprises a main housing and a movable member and the step of reconfiguring the lamp from the closed configuration to the open configuration involves moving the moveable member from a first position relative to the main housing when the lamp is in the closed configuration to a second position relative to the main housing when the lamp is in said open configuration.

4. A method according to claim 3, wherein in the open configuration at least a portion of the movable member is spaced apart from the main housing such that a void is formed between the main housing and said portion of the movable member and the step of sitting the lamp on a road cone in said open configuration comprises receiving a portion of the road cone within the void.

5. A method according to any of claims 3 or 4, wherein the moveable member comprises a recess arranged and configured to receive a portion of a road cone when the lamp is in the open configuration and the step of sitting the lamp on a road cone in said open configuration comprises receiving a portion of the road cone within the recess.

6. A method according to any preceding claim, wherein the method includes the step of removing a first removably mounted coloured lens from the lamp and mounting a second, differently coloured, lens on the lamp.

7. A method according to any preceding claim, wherein the method further includes the step of transporting the lamp to the site of the road hazard in the closed configuration.

8. A method according to claim 7, wherein the method comprises the step of providing a second lamp, each lamp comprising a formation and a corresponding formation and the step of transporting the lamp to the site of the road hazard includes engaging the formation of the lamp with the corresponding formation of the second lamp.

9. A method according to any preceding claim, wherein the lamp comprises a switch and the step of reconfiguring the lamp from the closed configuration to the open configuration switches the lamp on, and/or the step of reconfiguring the lamp from the open configuration to the closed configuration switches the lamp off.

10. A road guarding lamp being moveable between a closed configuration for storage and at least one open configuration, wherein in at least one open configuration the lamp is arranged for deployment on a road cone and the lamp in at least one open configuration is arranged for standing on level ground.

11. A road guarding lamp according to claims 10 wherein the lamp comprises a main housing and a moveable member, the moveable member being in the form of an outer casing arranged and configured to extend over at least a portion of the main housing when the lamp is in the closed configuration.

12. A road guarding lamp according to any of claims 10 to 11, wherein the lamp comprises a main housing, the main housing comprising a main portion and a base portion; and wherein the main portion comprises a light source and the base portion is arranged to receive a battery pack.

13. A road guarding lamp according to any of claims 10 to 12 wherein the lamp includes a passive infrared sensor arranged and configured to facilitate synchronisation of the lamp with other like lamps.

14. A road guarding lamp according to any of claims 10 to 13, wherein the lamp includes a light source comprising a plurality of light emitting diodes.

15. A road guarding lamp according to any of claims 10 to 14, for use in the method of any of claims 1 to 9.
